# EUROPEAN PATENT APPLICATION

(11) **EP 0 540 925 A1**
(43) Date of publication of application: **12.05.1993**
(21) Application number: 92117809.1
(22) Date of filing: 19.10.1992
(51) Int. Cl.: G06F 3/033

(54) **Multicons**

(30) Priority: 31.10.1991 US 785732
(71) Applicant: International Business Machines Corporation, Armonk, N.Y. 10504 (US)
(72) Inventor: Martinez, Anthony E., Ramsey, New Jersey 07446 (US)
(74) Representative: Schäfer, Wolfgang, Dipl.-Ing.

(57) **Abstract**

A new means of providing access to an application or data file in an object oriented graphical user interface is disclosed. A set of icons is assigned to each object; each icon representing a different system behavior to be invoked when the object is opened. In a preferred embodiment, the icons resemble a stack of cards. Each card icon in the set has a main pictorial centered on the card, representing the object, and a word or symbol representing a behavior, such as run, edit or send, at a selected corner or border of the card. In the stacked state, the card on top of the stack represents the active or default behavior which will be invoked when the icon is selected by the user. If the default behavior is not desired, a user will unstack the icons to show the faces of the icons associated with the other modes of behavior and then select the desired behavior by selecting the appropriate icon to open the object. The set of icons in the present invention can be referred to as a multicon.

## Description

The present invention relates generally to the management of application programs and other data structures within a data processing system. More particularly, it relates to an improved graphical user interface with which the user can interact to manipulate a icon or symbol which opens onto multiple points of an object in the data processing system.

At one time, computer systems were used only by highly skilled scientists, programmers and other professionals who were able and were motivated to spend a great amount of time and energy in mastering the particular application in which they were interested. As computer technology has proliferated, and particularly with the personal computer, every level of society has now been exposed to computers. Because of the lesser sophistication of the average user today, a variety of means of making the computer system accessible, or "user friendly" have been proposed.

One of the most efficient means of presenting information to the user is through the use of a graphical user interface which enables the user to interact with the computer system and the data stored therein by using an object-action paradigm. The interfaces represent information such as data files and the applications which manipulate the data files as objects. The objects generally have associated certain properties which constrain their behavior when acted upon by the computer system. Examples of such graphical environments include: IBM's OS/2 (TM) with Presentation Manager (TM), Hewlett-Packard's NewWave (TM) and MicroSoft Windows 3.0 (TM) and the operating system of the Apple Corporation.

In these graphical user interfaces, the objects, e.g., application and data files, are represented by icons on the system display. Icons provide a convenient pictorial means of allowing end users to recognize the object being displayed by the computer system. Through the use of these icons, the system allows the user to "point and shoot" by moving a cursor or pointer to an icon and pressing one or more buttons on a mouse or a keyboard to achieve a desired result. For example, a user may drag an icon representing a text file to an icon representing a printer. This will result in the text file being printed on the system printer. In an application used to manage data files, dragging an icon representing one data file from a folder icon representing a first subdirectory, which comprises several data files, to another folder icon representing a second subdirectory comprising a different set of data files, moves the location of the data file object from the first subdirectory to the second.

One of the basic operations used in the graphical user interface occurs when the user first begins interacting with a particular object. One typical means of invoking an object is by moving a pointer with a mouse pointing device to an icon representing the object and double clicking with a mouse button. This "opens" the object. However, "open" is a subjective action which depends on the behavior selected by the application programmer. This ambiguity results in confusion for the user of the computer system. Among the options which a programmer might implement, would be to run, edit, view or print the selected object.

In the existing graphical user interfaces, a single icon represents a single object. However, this icon associated with the object generally does not inform the user about the objects available functions. It offers a single point of entry to the program, but does not inform the user which, of many possible function will be executed by the data processing system. Further, although the graphical user environment is known to greatly facilitate the interaction between user and computer system, the user is forced to navigate through many menus and screens to activate a function which is not the function selected by the programmer upon opening the object.

The present invention introduces a solution to these and other problems.

It is an object of the present invention to provide multiple entry points to an object at an icon level in a graphical user interface.

It is another object of the present invention to remove the ambiguity concerning the effect of opening an object in a graphical user interface.

It is another object of the present invention to reduce the number of icons cluttering the screen in a graphical user interface.

It is another object of the present invention to streamline the interaction of the computer system and the user by eliminating the need for menu selections and other intermediate steps.

It is another object of the present invention to define a default behavior upon the opening of an object in a graphical user interface and yet allow a user from an icon to select an alternate behavior to be performed upon the opening of the object.

It is another object of the present invention to introduce a new entity, a multicon, to a graphical user interface.

These objects are solved basically by the solution given in the independent claims.

Further advantageous embodiments of the present invention are laid down in the subclaims.

These and other objects are accomplished by a new means of providing access to an application or data file in a data processing system equipped with an object oriented graphical user interface. A multicon, which comprises a set of icons, is assigned to an object in the system; each icon represents a different system behavior to be invoked when the object is opened. In a preferred embodiment, the set of icons resemble a stack of cards. Each card icon in the set has a main pictorial centered on the card, representing the object, and a secondary pictorial representing a behavior, such as run, edit or send, at a selected corner or border of the card. In the stacked state, the card icon on top of the stack represents the active or default behavior which will be invoked when the multicon is opened by the user. If the default behavior is not desired, a user will unstack the card icons to show the faces of the card icons associated with the other modes of behavior and then select the desired behavior by selecting the appropriate card icon to open the object.

As the system goes directly from the multicon to the desired behavior upon opening, menus selections and other intermediate steps from within the object are avoided. The multicon provides multiple entry points to an object while requiring a minimal display space in the graphical user interface. Further, as each card icon has an indicia which clearly indicates which behavior will be invoked upon opening the object, the ambiguity of the prior art graphical user interfaces is eliminated.

The invention will be shown in more detail in the following description in accordance with the drawing in which embodiments are shown and in which:
- Fig. 1: shows a personal computer comprising system unit, keyboard, mouse and display;
- Fig. 2: is a block diagram of the components of the personal computer shown in Fig. 1;
- Fig. 3: depicts a generic multicon according to the present invention in stacked state;
- Fig. 4: depicts a generic multicon according to the present invention in a splayed state;
- Fig. 5: shows a computer system equipped with a graphical user interface in which data files and the applications which operate upon them are represented as separate icons;
- Fig. 6: depicts a computer system equipped with a graphical user interface in which only data file icons are visible to the user;
- Fig. 7: depicts a graphical user interface in which four multicons are presented in the client area of an application written according to the present invention;
- Figs. 8-10: show multicons written for existing applications;
- Figs. 11-14: depict a method for changing the default behavior in the icon of the present invention; and
- Fig. 15: depicts a multicon for a multimedia mail item according to the present invention.

The invention may be run on a variety of computers under a number of different operating systems. The computer could be, for example, a personal computer, a mini computer or a main frame computer. The computer may be a standalone system, part of a network such as a local area network or wide area network or a larger teleprocessing system. For purposes of illustration only, the invention is described below as implemented on a personal computer, such as IBM's PS/2 (TM) series, although the specific choice of computer is limited only by memory and disk storage requirements. For additional information on IBM's PS/2 series of computers, the reader is referred to Technical Reference Manual Personal System/2 (Model 50, 60 Systems), IBM Corporation, Part No. 68X2224, Order No. S68X-2224, and Technical Reference Manual, Personal System/2 (Model 80), IBM Corporation, Part No. 68X2256, Order No. S68X-2256.

The operating system on which a preferred embodiment of the invention was implemented was IBM's OS/2 with Presentation Manager (TM), but it will be understood that the invention could be implemented on other and different operating systems and, more importantly, could be integrated into, and therefore be a part of, an operating system. For more information on IBM's OS/2 operating system, the reader is referred to IBM Operating System/2, Version 1.2, Standard Edition Technical Reference, IBM Corporation.

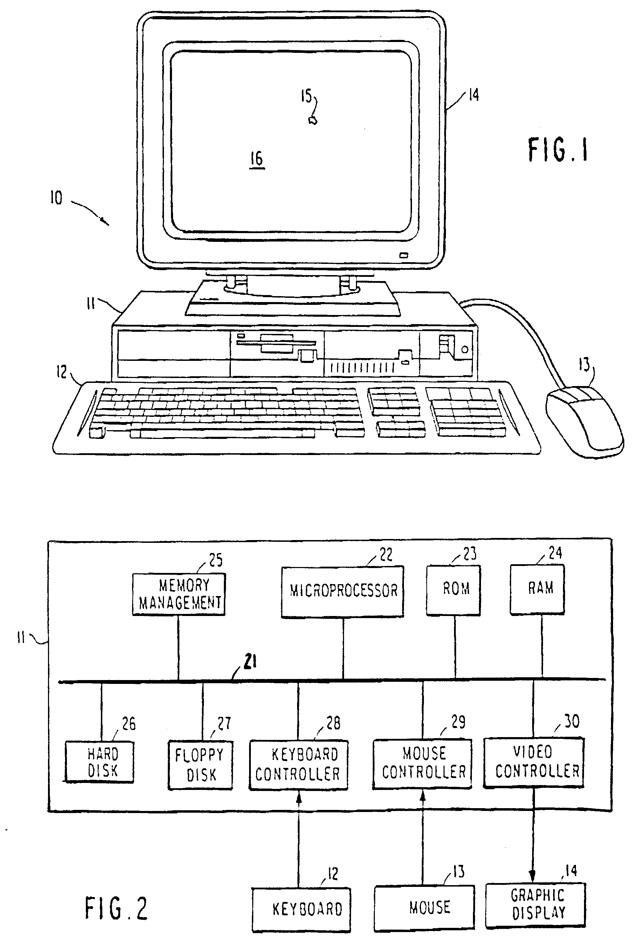

Referring now to the drawings, and more particularly to Fig. 1, there is shown a personal computer 10 comprising a system unit 11, a keyboard 12, a mouse 13 and a graphics display device or monitor 14. The keyboard 12 and the mouse 13 constitute user input devices, and the display device 14 is a user output device. The mouse 13 is used to control a cursor 15 displayed on the screen 16 of the display device 14. The graphic user interface (GUI) supported by this system allows the user to "point-and-shoot" by moving the pointer or cursor 15 to an icon representing an object at a specific location on the screen 16 and then press one of the mouse buttons to perform a user command or selection. Those skilled in the art understand that pointing devices such as a touch sensor, graphic tablet, trackball or joystick could alternatively be used to manipulate the pointer across the graphical user interface.

Fig. 2 shows in block diagram form the components of the personal computer shown in Fig. 1. The system unit 11 includes a system bus 21 to which the various components are attached and by which communication between the various components is accomplished. A microprocessor 22 is connected to the system bus 21 and is supported by read only memory (ROM) 23 and random access memory (RAM) 24, also connected to system bus 21. The microprocessor 22 in the IBM PS/2 series of computers is one of the Intel family of microprocessors including the 80286, 80386 or 80486 microprocessors, but other microprocessors including, but not limited to, Motorola's family of microprocessors such as the 68000, 68020 or 68030 microprocessors and various RISC (Reduced Instruction Set Computer) microprocessors manufactured by IBM, Hewlett-Packard, Sun Microsystems, Intel, Motorola and others may be used in a specific computer.

The ROM 23 contains, among other code, the Basic Input/Output System (BIOS) which controls basic hardware operations, such as interactions of the disk drives and the keyboard. The RAM 24 is the main memory into which the operating system, data files and application programs are loaded. A memory management chip 25 is connected to the system bus 21 and controls Direct Memory Access (DMA) operations, including paging data between RAM 24 and a hard disk drive 26 and a floppy disk drive 27.

To complete the description of the system unit 11, there are three I/O controllers. These are the keyboard controller 28, the mouse controller 29 and the video controller 30, all of which are connected to the system bus 21. As their names imply, the keyboard controller 28 provides the hardware interface for the keyboard 12, the mouse controller 29 hardware interface for the mouse 13, and the video controller 30 provides the hardware interface for the graphic display device 14.

The hardware illustrated in Figs. 1 and 2 is typical but may vary for a specific application; that is, there may be other peripherals, such as optical storage media, audio I/O, printers and the like. The invention is specifically directed to an enhancement to the operating system which controls or "runs" the hardware. The invention may be added to an existing operating system or it may provide the basis of an entirely new operating system, preferably the operating system supports a graphical user interface.

In an object oriented graphical user interface, data is encapsulated as a plurality of objects. Further, the applications or processes which manipulate the data can also be defined as objects. Each object is constrained in its behavior by certain rules which apply for that object or class of objects. It is convenient to represent the objects as pictorial symbols or icons. An icon serves as a readily identifiable face to the user to recognize the data or process which he wishes to manipulate. Objects can be represented in a nongraphical manner, e.g., as a cryptic text string, but with a concomitant loss in usability. Human factors studies have shown that a user will find it much easier to "grab" a document icon and "drag" it to the printer icon to have it printed, than to issue a cryptic print command for an equally cryptic file name.

The present invention assigns more than one icon to an object. Each icon corresponding to a specific view or behavior of that object upon opening. "Views" and "behaviors" are considered to be interchangeable terms as the differing operations performed by the system, or behaviors, accomplish results which must eventually be communicated back to the user in some way, usually visually on the system display or by printing on the system printer, or views.

The range of possible views for a given object depend on the rules that define and control the object's contents. For example, an object that contains data arranged in rows and columns could have a matrix view as well as an X-Y graphed view. Different views allow the same data to be interpreted in different ways. Multicons reinforce the notion that there is a single place for the data and multiple ways it can be viewed.

An object may have any number of card icons assigned to it in a multicon, each card corresponding to a specific view or behavior. For example, a program written in assembler language may have a multicon which would permit a user to directly access the edit, executable list and debug versions of it. By grouping all possible functions into a single, stackable multicon, valuable display space is saved.

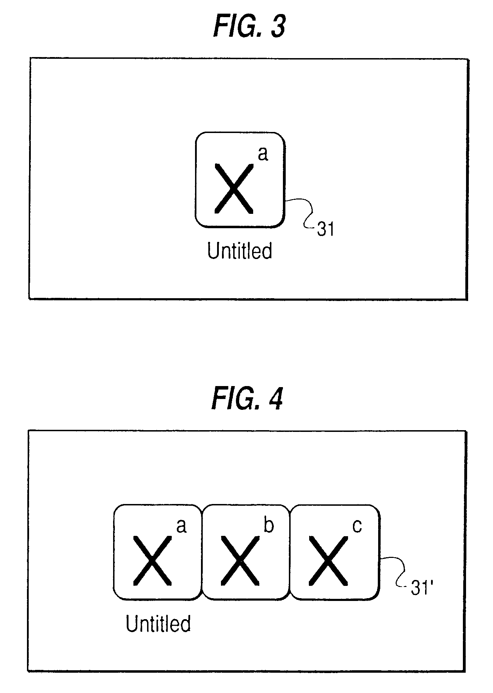

Fig. 3 depicts a generic multicon 31 in a stacked state. A multicon resembles a stack of cards with each card representing a different behavior of the object. The card on top represents the active or default behavior. If the mouse pointer were brought to the multicon and the multicon opened, the active behavior of the object would be invoked. While the preferred embodiment below discusses manipulation of icons by a mouse pointing device, other input devices such as touch sensors, trackballs and joysticks can be used to manipulate a pointer in the GUI to select an object. If the user did not wish the default behavior, he could splay the multicon to reveal other views or behaviors of the object, as shown in Fig. 4. With the multicon 31' in a splayed state, the mouse pointer can be brought to any card icon and opening that card icon will expose the corresponding behavior of the data processing system. Each card in the multicon 31' is divided into two areas. The central area contains an indicia, shown as "X" in the figures, which represents the object. A second area, shown in the figures at the upper right hand corner of each card, contains an indicia, e.g., "a", "b" or "c", which represents the behavior or view which will result when that particular card is opened. For the generic multicon 31' in Fig. 4, there are three ways in which object "X" may be opened. Those skilled in the art would recognize that a multicon could be presented in other ways for useability and/or artistic reasons. However, there should be one portion of each card icon belonging to the object which remains constant across views, representing the object itself, e.g., a document, a spreadsheet, an application program, and a second portion of the icon which varies, depicting what action will be performed when the object is opened. In the preferred embodiment, the varying portion should be standardized across objects so that the function upon opening is easily and consistently identified.

Included with the graphical user interface in the operating system is a graphics toolkit which allows developers to generate and store bit maps for icons for use in the GUI as well as make graphical calls to the operating system when drawing services are required. Applications or the operating system can call the toolkit to draw icons at selected locations within the display space controlled by the object. A new piece of code, most likely residing in the applications or operating system, which recognizes the stacked and splayed state of the multicon and knows how to present each state is required for the present invention. Data structures which keep track of the state as well as the order of the card icons in each multicon are also required. The data structures could be kept with the object as part of its extended attributes or in a master index of objects in the operating system. When the call is made to the operating system to present the multicon, the multicon graphical code searches the appropriate data structure for the current status and order of the cards in the multicon.

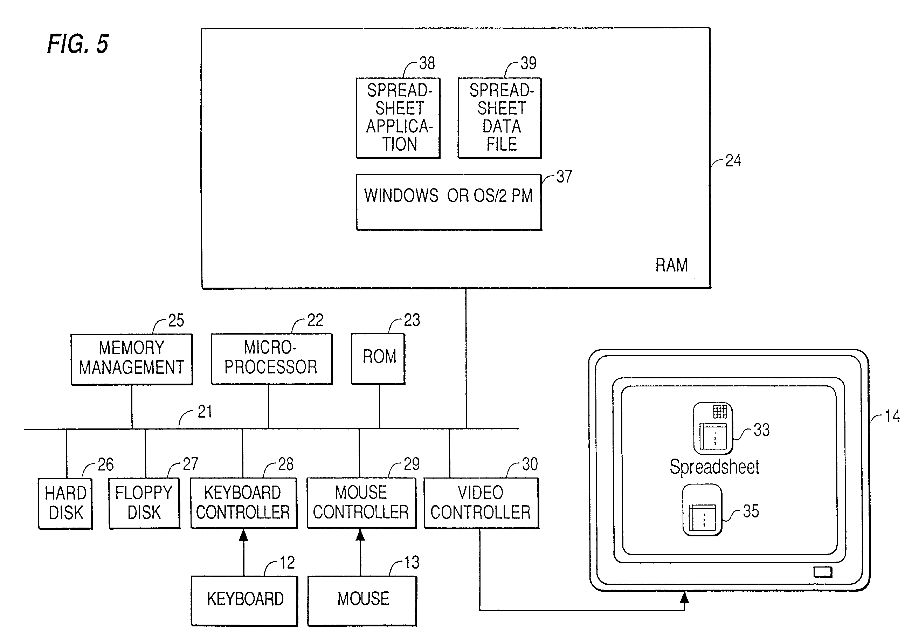

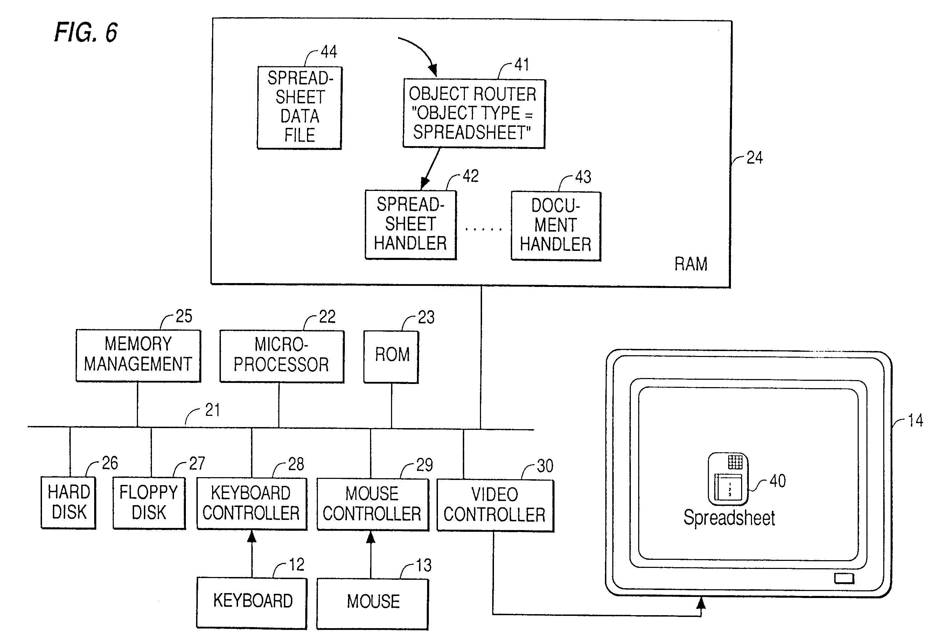

The manner in which objects are handled in a GUI will differ from operating system to operating system. Two possible mechanisms are illustrated in Figs. 5 and 6, which depict opening a spreadsheet file object in two different operating systems. In Fig. 5, the GUI presented on system display 14 depicts both the data files and the application which manipulate the data files as separate icons. Thus, a spreadsheet file icon 33 and a spreadsheet application 35 are presented in the GUI. When the user elects to open the spreadsheet file icon 33, he moves the mouse pointer via the mouse 13 to the icon 33 and double-clicks on the icon 33. The electrical signals from the mouse 13 are processed by the mouse controller 29 and sent to the operating system 37 in RAM 24 via the system bus 21. The operating system 37 then checks to see which application 38 is associated with the opened data file 39, usually by file type. The operating system 37 then executes the application 38 with the file name of the data file 39 passed on it as a parameter. The application 38 then opens the data file 39. The user may alternatively open the application and then call the data file. MicroSoft Windows 3.0 and IBM OS/2 with PM are examples of this type of operating system. In this type of operating system, both the applications and data files can be represented by multicons.

In Fig. 6, an object-based GUI is shown. Applications are hidden below the surface, thus, only data file icons, such as the spreadsheet icon 40, are presented on the system display 14. When the spreadsheet file icon 40 is opened, an object router 41 checks the type of object being opened and invokes the handler 42 appropriate for that object 44. Hewlett-Packard's NewWave and IBM's OfficeVision/2 are examples of GUI platforms having routes and handlers which cause the operating system to behave in this manner. In this type of operating system, only the data files can be represented by multicons.

In both of these mechanisms, the "open" command will result in a single initial view exposed to the user. A speadsheet will usually open to a matrix of text and numbers. But what if the user wanted to see a pie chart? The user would then have to issue commands to the spreadsheet application or handler to change the view of the object. With Multicons, mouse selection will specify, before the object is opened, the type of view the user wants. Of course, a certain amount of programming might need to be done, since the handler would have to recognize the extra parameter to the "open" command. Rather than an "open" command, the operating system would receive a "open spreadsheet view" versus "open pie chart view" command.

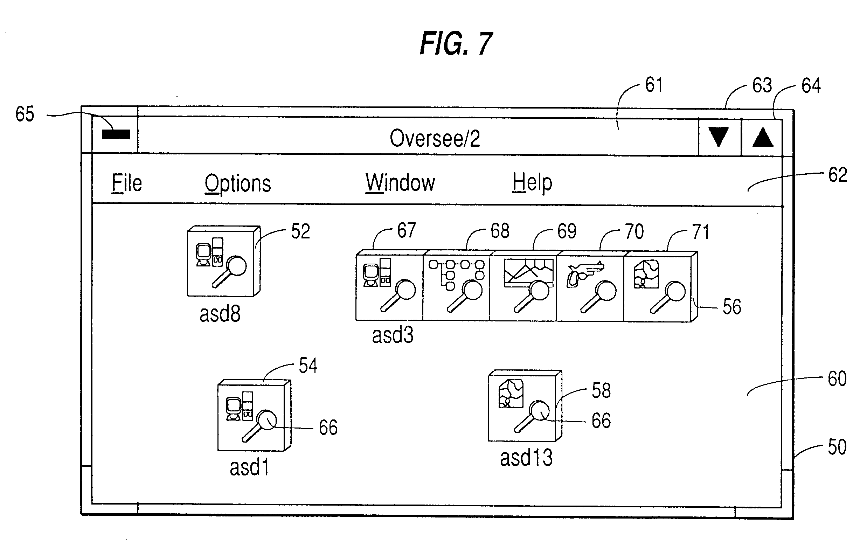

Fig. 7 depicts a graphical user interface for an application designed according to the principles of the present invention. An application called Oversee/2 is displayed in its window 50 having multicons 52, 54, 56 and 58 represented in its client area 60. Standard items such as the title bar 61, action bar 62, icons 63, 64 for minimizing or maximizing the window 50 and an icon 65 to close the window 50 are also depicted in the Figure. Oversee/2 is an application which works to control a set of personal computers, such as several PS/2s, in a Local Area Network (LAN), each computer is represented by a multicon 52, 54, 56 or 58. The status of each server can be monitored and controlled from a central computer by referring to the different views offered by each multicon.

Three multicons 52, 54 and 58, representing the asd8, asd1 and asd13 servers are in their stacked state. The multicon 56 representing the asd3 server is in its splayed state. As is readily appreciated, multicons in their stacked state minimize the clutter in a user's display space. The magnifying glass icon 16 on each card represents a monitoring function for the respective file server. The splayed multicon 56 for the asd3 server depicts all the ways that the servers could be monitored. The display and system unit icon 67 represents a view of the asd3 device by hardware summary. The flow chart icon 68 represents a view of the asd3 server by operating processes. A view of asd3 by operating statistics can be opened by bringing the pointer to the icon with the graphical icon 69.

Similarly, views of the asd3 server by triggers installed or by files installed can be opened by bringing the pointer to the icons with the pistol icon 70 or the paper sheet icon 71 respectively.

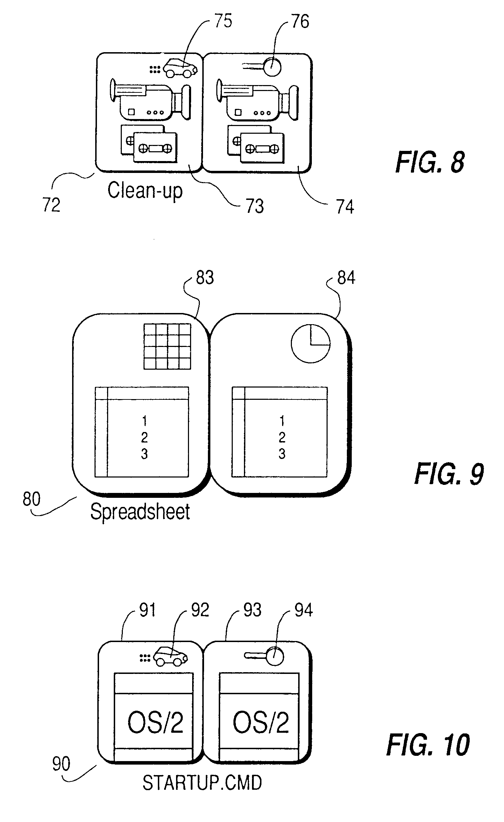

Multicons can also be used for existing applications. The ability to fit multicons to existing applications is primarily dependent on whether the application or object handler has a means by which a certain view of an object can be specified automatically, that is, without requiring the end user to issue interface commands. If such a means is available, the programmer or end user can map each of the multicon cards to a specific command for that application or handler. For example, in Fig. 8, the "Clean-up" application would have to support a "RUN" and a "PROFILE" command at invocation time.

Fig. 8 shows a multicon 72 for an object created by means of a "recorder" function which can be provided with the operating system. The recorder tool enables an application programmer to create a file containing a sequence of commands which would normally issue to the operating system and its presentation manager interactively. When the file is played back, the prerecorded commands are automatically issued to operating system. In Fig. 8, the "Clean-Up" application is used to tidy up the graphical user interface by arranging the icons in rows, columns, etc. The "Clean-Up" multicon 75 in Fig. 8 is in its splayed state. The default behavior is to execute the file, which is denoted by the running car 75 at the upper right hand corner of the run card icon 73. The convention adopted in the preferred embodiment, is to present the default behavior in the left most position when the multicon is in its splayed state. If the user wants to edit the "Clean-up" object properties, he double clicks with the left button on the card 74 with the magnifying glass 76.

A spreadsheet data file multicon 80 is shown in Fig. 9. A suitable data structure by which the operating system can recognize user actions on the multicon is as follows:
CURRENT.STATUS=SPLAYED
POSITION.1=SHEET
POSITION.2=GRAPH
DOUBLE.CLICK.SHEET=EXCEL "OPEN SHEET"
DOUBLE.CLICK.GRAPH=EXCEL "OPEN GRAPH"
When the system detects that the user double-clicked on the "Graph" multicon card 83, for example, the system would look up in a data structure that correlates to that card under POSITION 2, extract the command OPEN "GRAPH" and pass it to the spreadsheet application or handler. The structure would be persistent between system usages and would describe the type of icon to use at what position as well as the current status of that particular multicon, splayed or stacked. The SHEET and GRAPH names correspond to pictorial icon files 83, 84 that can be created using a variety of existing icon editing tools.

In an embodiment using the File Manager in OS/2, a file management tool shipped with PM, a user can replace the command file STARTUP.CMD with a multicon 90, as shown in Fig. 10. Next, the running of the command file is mapped to the card 91 that has the little car 92 and the editing of the command file to the card 93 with the magnifying glass icon 94. A user will usually "run" command files rather than edit them, the Multicon would generally be stacked with the "Run" card 91 on top, as the default behavior. To edit the file, the user would temporarily splay the multicon as shown in the Figure and open the "Edit" card. The system would then automatically invoke the editor with the "Edit" command. The internal data structure of the STARTUP.CMD multicon 90 is as follows:
CURRENT.STATUS=SPLAYED
POSITION.1=RUN
POSITION.2=EDIT
DOUBLE.CLICK.RUN=EXECUTE
DOUBLE.CLICK.EDIT=EDIT
As discussed above, the cards in a multicon can either point to different entry points of the same application (handler) as shown in Fig. 9, or to send the object to different handlers as shown in FIG 10. For STARTUP.CMD, the EXECUTE command is sent to the operating system and the EDIT command is sent to the system editor.

In a preferred embodiment, multicons use a 2 button mouse, which is standard on PS/2s. The mouse actions which are summarized below are contained interface code for the code which handles mouse input for the operating system. Alternatively, the code could be written at an application level. In all instances, the mouse pointer is oriented above the multicon or one of its splayed cards before the button command is activated:
- Button 1: Single click (STACKED): Select MULTICON
Single click (splayed): Select all cards of MULTICON
Double click (STACKED): Open active view
Double click (splayed): Open view of card under pointer
Hold+drag (STACKED): Move MULTICON
Hold+drag (splayed): Move splayed MULTICON
- Button 2: Single click (STACKED): Spring-loaded splay (defined below)
Single click (splayed): Not used
Double click (STACKED): Toggle to splay mode
Double click (splayed): Toggle to stacked mode
Hold+drag (STACKED): Not used
Hold+drag (splayed): Reorder MULTICON

The spring-loaded splay mode, activated by button 2, allows the user to quickly open an unexposed view of a stacked MULTICON. Using Fig. 3 to illustrate, if the user wishes to activate view "b", he clicks and holds button 2 on the stacked MULTICON, the MULTICON responds by splaying in Fig. 4. Still with button 2 down, the arrow pointer is moved to card "b", and the button is released. View "b" opens up and the MULTICON automatically snaps back to its stacked form. This is identical to executing a pull-down item in an action bar by clicking on it, moving the arrow pointer to the selection within the pull-down, and releasing the mouse button all in one motion. "Selecting" as opposed to "opening" is an operation which marks the object for future operations rather than invoking the behavior which the programmer has chosen for opening.

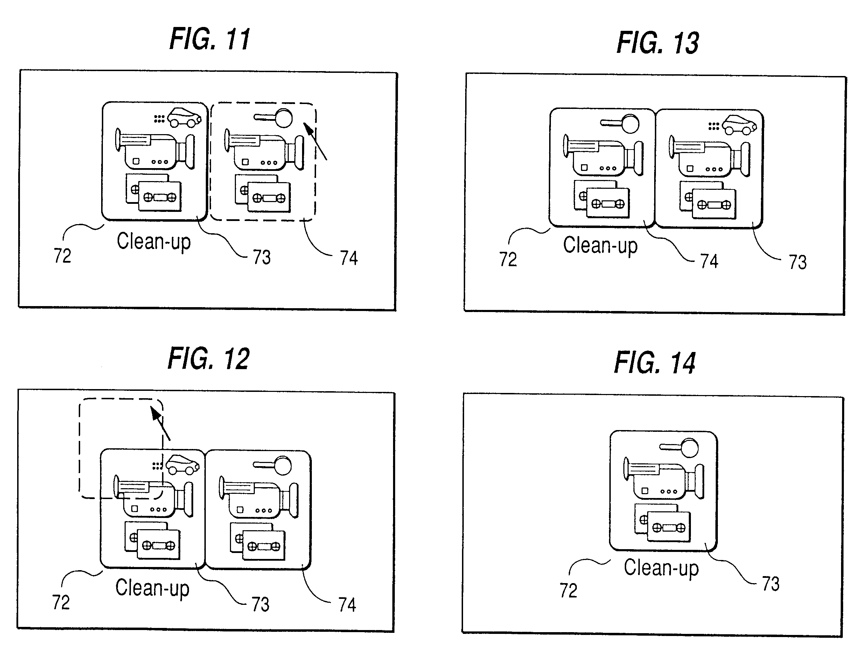

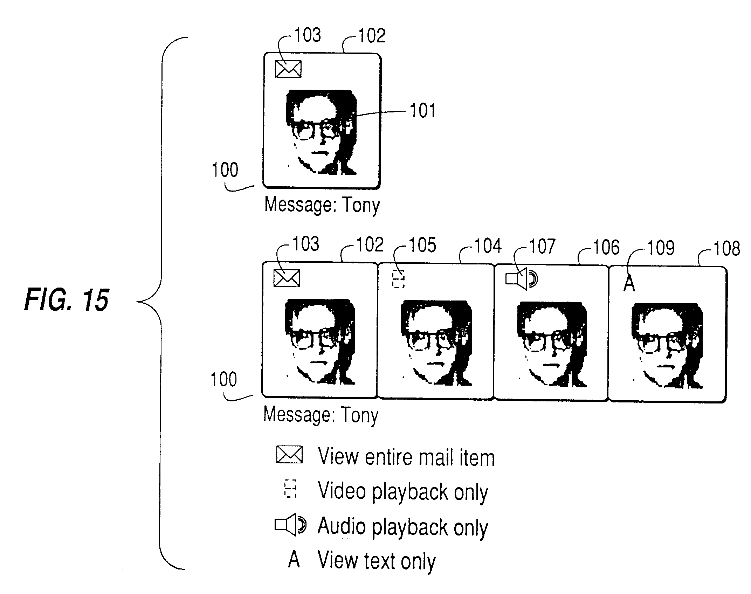

Figs. 11-14 show one method for changing the default behavior of the Clean-Up multicon 72. As shown in Fig. 11, the data structure of the multicon 72 can be represented as:
CURRENT.STATUS=SPLAYED
POSITION.1=RUN
POSITION.2=EDIT
DOUBLE.CLICK.RUN=RECORDER RUN
DOUBLE.CLICK.EDIT=RECORDER PROFILE
First, the multicon is splayed by a double click on button 2 of the mouse. After splaying the multicon 72 in Fig. 11, the edit card 74 is grabbed by the user by holding button 2. In Fig. 12, the edit card 74 is dragged while depressing button 2 on the mouse, left of the card 73 representing run behavior. In Fig. 13, the user has released button 2 on the mouse, which reorders the multicon 72 so that the edit card 74 is now left of the run card 73. The data structure of the multicon at this point is:
CURRENT.STATUS=SPLAYED
POSITION.1=EDIT
POSITION.2=RUN
DOUBLE.CLICK.RUN=RECORDER RUN
DOUBLE.CLICK.EDIT=RECORDER PROFILE
In Fig. 14, the multicon 72 is now in stacked form by double clicking button 2 with the edit mode being the default behavior when the user chooses to open multicon for clean-up in stacked form. At this point, the data structure is:
CURRENT.STATUS=STACKED
POSITION.1=EDIT
POSITION.2=RUN
DOUBLE.CLICK.RUN=RECORDER RUN
DOUBLE.CLICK.EDIT=RECORDER PROFILE
Multicons can advance multimedia technology by providing multiple entry points to composite documents as a mechanism to filter out unnecessary information channels. If a document file existed that combined video, audio and text information, a multicon could be constructed that would have four cards. One card would provide a composite view of the document, combining the video, audio and text channels, and the remaining three cards would provide separate views into these channels. In Fig. 15, a multicon for multimedia mail item is shown in both a stacked state 100 and a splayed state 100'.

A picture 101 of the mail item sender is the main icon representing the object across the possible views. In the stacked state of the multicon 100, only the card 102 representing the default behavior, presenting the composite view, is visible. The envelope pictorial 103 represents this view. In the splayed state, a card 104 with the film pictorial 105 represents a video playback only view, a card 106 with the speaker pictorial 107 represents a audio playback only view and a card 108 with the alphanumeric character 109 represents a text only view. Thus, one could fine-tune the delivery of information to the user's preferences or to the hardware limitations of the data processing system, e.g., no video capacity. Multimedia can be delivered at the multicon level by enabling the multicon card to be composed of AVC full-color bitmaps that can be animated. Combined with sound, the total effect would result in a rich GUI with greatly improved usability.

While the invention has been described with respect to particular embodiments above, it would be understood by those skilled in the art that modifications may be made without departing from the spirit and scope of the present invention. While it is preferred that multicons be integrated into the graphical user interface of the operating system for all objects, it is possible to have multicons for a single object in the data processing system. The object passes information to the operating system and its presentation manager how to display the multicon. Other methods of presenting a "stacked" state in a compact pictorial with the default behavior most prominent and a "splayed" state in a pictorial presenting the different behaviors associated with the object will occur to those skilled in the art. These embodiments are for the purpose of example and illustration only and are not to be taken to limit the scope of the invention narrower than the scope of the appended claims.

## Claims

1. In a data processing system having a graphical user interface for managing a plurality of objects, a method for providing access to multiple system behaviors upon opening one of the objects comprising the steps of:
assigning a plurality of icons to the object, each of the icons representing a different behavior of said data processing system when the object is opened;
displaying the plurality of icons in a first, compact state with an icon representing a default system behavior associated with the object displayed most prominently; and,
responsive to opening the plurality of icons in the first state, executing the default system behavior of the object by the data processing systems.

2. In a data processing system, a method of accessing one of a plurality of system behaviors associated with an object upon opening the object, each of the system behaviors represented by a different indicia in a graphical user interface comprising the steps of:
invoking a default system behavior of the object by opening the object in a first state in which an indicia representing the default system behavior is most prominently displayed on a system display.

3. The method as recited in claim 1 or 2 which further comprises the steps of:
responsive to a command by the user, displaying the plurality of icons in a second state wherein individual icons representing other system behaviors associated with the object are visible to permit the selection of a behavior other than the default system behavior of the object;
responsive to opening one of the plurality of icons in the second state, executing a system behavior of the object associated with the opened icon by the data processing system.

4. The method as recited in claim 1, 2 or 3, which further comprises the steps of:
transforming the object to a second state in which a plurality of indicia are displayed on the system display, each indicia corresponding to one of the system behaviors;
invoking a system behavior of the object by opening the object from one of the plurality of indicia.

5. The method as recited in any one of the claims 1 to 4 which further comprises the step of changing the default system behavior by reordering the plurality of indicia while in the second state.

6. The method as recited in any one of the claims 1 to 5 wherein each of the plurality of indicia are icons having a first area containing a first pictorial which represents the object which is constant across the system behaviors and a second area containing a variable pictorial which varies according to the system behavior represented by the icon.

7. The method as recited in any one of the claims 1 to 6 wherein the first state is depicted as a stack of icons only the icon representing the default system behavior being visible, and the second state is depicted as splayed set of icons where all of the plurality of icons are visible.

8. In a data processing system, a graphical user interface for presentation on a system display comprising:
iconic means to access a plurality of system behaviors associated with an object each of which is associated with an icon, iconic means having a first state in which the icon associated with a default system behavior of the object is most prominently displayed on the system display and a second state in which icons associated with a plurality of system behaviors associated with the object are displayed.

9. A data processing system in which data is managed as a plurality of objects comprising:
an object associated with a plurality of system behaviors;
means for assigning icons to each of the plurality of system behaviors of the object;
means for displaying the plurality of icons in a first state so that an icon representing a default system behavior of the object is most prominent; and,
means for executing the default behavior of the object upon opening the plurality of icons in said first state.

10. The system or method as recited in any one of the claims 1 to 9 wherein the first state is depicted as a stack of icons only the icon representing the default system behavior being visible, and the second state is depicted as splayed set of icons where all of the icons associated with the object are visible.

11. The data processing system or method as recited in any one of the claims 1 to 10 which further comprises means for or steps of:
displaying the plurality of icons associated with the object in a second state to permit the selection of a system behavior other than the default system behavior of the object; and,
executing a behavior of the object upon opening one of the plurality of icons in the second state.

12. The system or method as recited in any one of the claims 1 to 11 which further comprises the steps or a means of reordering the plurality of icons thereby changing the default system behavior.

13. The system or method as recited in any one of the claims 1 to 12 wherein each of the plurality of icons have a first area containing a first pictorial which represents the object which is constant across the system behaviors and a second area containing a variable pictorial which varies according to the system behavior represented by the icon.

14. The system or method as recited in any one of the claims 1 to 13 wherein at least two of the system behaviors are different functions of the object.

15. The system or method as recited in any one of the claims 1 to 14 wherein at least two of the system behaviors result when the object is operated upon by two different system processes.

16. A data processing system having a processor and a memory in which data is managed as a plurality of objects comprising:
a display for presenting a graphical user interface;
an object associated with a plurality of system behaviors;
a first state in which only one of the plurality of system behaviors is directly executable from the graphical user interface, the object represented in a form identified with the system behavior in the graphical user interface; and,
a second state in which a plurality of system behaviors is directly executable from the graphical user interface, the object represented in a form identified with the executable system behaviors in the graphical user interface.
